# EUROPÄISCHE PATENTSCHRIFT

(11) **EP 1 371 583 B1**
(45) Veröffentlichungstag und Bekanntmachung des Hinweises auf die Patenterteilung: **16.08.2006**
(21) Anmeldenummer: 02405476.9
(22) Anmeldetag: 11.06.2002
(51) Int. Cl.: B65G 47/51

(54) **Kettenspeicher sowie Verfahren zu dessen Steuerung**
Variable-capacity buffer store and its method for control
Magasin intermédiaire à capacité variable et son procédé de commande

(43) Veröffentlichungstag der Anmeldung: 17.12.2003
(73) Patentinhaber: Rotzinger AG, 4303 Kaiseraugst (CH)
(72) Erfinder: Spettel, Jörg, 79539 Lörrach (DE)
(74) Vertreter: Braun, André jr.

(56) Entgegenhaltungen:
- EP-A- 0 806 152
- DE-U- 9 012 074

## Beschreibung

Die Erfindung betrifft einen Kettenspeicher gemäss dem Oberbegriff des Anspruchs 1.

Solche Kettenspeicher werden üblicherweise zum Zwischenspeichern von gleichartigen Gegenständen bzw. Produkten in eine Produktionslinie eingesetzt.

Bei den Gegenständen bzw. Produkten kann es sich beispielsweise um Schokoladentafeln handeln, die von einer Produktionsvorrichtung zu mindestens einer Verpackungsvorrichtung gefördert werden. Die Produkte können jedoch statt aus Schokoladentafeln aus anderen stückförmigen, süssen oder nicht-süssen Nahrungsmitteln, zum Beispiel Gebäckstücken, oder aus Dosen oder sonstigen Behältern mit irgend einer Füllung oder aus Bauteilen für den Maschinenbau, zum Beispiel Kugellagern, bestehen, die zu einer Verpackungsvorrichtung oder sonstigen Bearbeitungsvorrichtung gefördert werden.

Bei bekannten Einrichtungen zur Herstellung und Verpakkung von Schokoladentafeln werden die von einer Produktionsvorrichtung produzierten Tafeln über eine Zufuhrbahn zu einem Kettenspeicher, danach durch diese hindurch zu Verpackungsvorrichtungen transportiert. Der Kettenspeicher dient in diesem Fall als Ausgleichsvorrichtung zum Ausgleichen von Schwankungen der Zufuhrrate von Tafeln oder der Verpackungsrate der Verpackungsvorrichtung sowie von vollständigen, beispielsweise 5 min bis 45 min dauernden Betriebsunterbrüchen der Produktionsvorrichtung oder der Verpackungsvorrichtung. Ein derartiger Kettenspeicher besitzt typischerweise 150 bis ungefähr 1200 an zwei endlosen Ketten angehängte Gondeln mit mehreren Tablaren zum Aufnehmen je einer Reihe Tafeln. Jede Kette wird dabei durch mehrere in einem Gestell gelagerte Kettenräder und durch mehrere an vertikal verschiebbaren Schlitten gelagerte Kettenräder umgelenkt und bildet eine Anzahl von Schleifen.

Bei den bekannten Kettenspeichern dieser Art werden die durch je einen Antriebsmotor angetriebenen Ketten des Belade- und Entladetrums intermittierend bewegt, das heisst diese stehen still, während Produkte an der Beladestation auf die Tablare aufgeladen und an der Entladestation von den Tablaren wieder abgeladen werden. Der Speicher arbeitet dabei nach dem "First-in"/"First-out" Prinzip und erlaubt insbesondere, Ein- und Auslauf mit verschiedenen Geschwindigkeiten zu betreiben.

So wird zum Füllen des Kettenspeichers eine Ablage-Etage nach der anderen beladen, wozu ein durch einen Steuermechanismus gesteuerter Belademotor den Beladetrum schrittweise an der Beladestation vorbeiführt, während der durch einen Entlademotor steuerbare Entladetrum blockiert ist. Zum Entnehmen von Gegenständen aus dem Speicher wird der Entladetrum schrittweise an der Entladestation vorbeigeführt, so dass die Ablage-Etagen ebenfalls schrittweise entladen werden können.

DE 90 12 074 U offenbart einen solchen Kettenspeicher gemäß dem Oberbegriff des Anspruchs 1.

Durch die Anforderung, immer höhere Kapazitäten zu verwirklichen und die Be- und Entladefrequenz des Speichers zu erhöhen, kommen die Gondeln an den Umlenkrädern vermehrt ins Schaukeln. Dies kann bei einer genügend grossen Taktfrequenz oder Transportgeschwindigkeit zum Aufschaukeln der Gondeln über die gesamte Länge der Kette führen, was im Extremfall zur Folge hat, dass die Güter von den Gondeln abgeworfen werden.

Dieser Nachteil ist dem Fachmann schon seit längerer Zeit bekannt. So offenbart zum Beispiel die US-A 4'813'752 ein Antipendel-System, welches durch ein planetenradartiges Abrollen von Zahnrädern dafür sorgt, dass die Gondeln im Bereich der Umlenkräder senkrecht und starr geführt werden, um dadurch nachteilige Schaukelbewegungen zu vermeiden. In diesem Fall handelt es sich um an den Umlenkrädern und den Gondeln angeordnete Zahnräder, die bei der Umlenkung mit ihren Zähnen ineinandergreifen.

Dieses Antipendel-System hat den Nachteil, dass die Gondeln an den Umlenkrädern so starr geführt werden, dass die auf den Ablage-Etagen befindlichen Güter aufgrund der in diesem Fall nur noch auf sie - und nicht mehr auf die Gondeln - einwirkenden und durch die Umlenkung bedingten Fliehkraft abgeworfen werden können, wenn die Geschwindigkeit, mit welcher die Gondeln um die Umlenkräder geführt werden, einen von der Masse der Güter abhängigen Grenzwert überschreitet.

EP 0 806 152 offenbart einen anders konzipierten Kettenspeicher, wobei die Schlitten unabhängig von den Antrieben der Be- und Entladungstrume wahlweise horizontal verschiebbar sind. Hier erfolgt das Beladen und Entladen von Formen nicht in einem vertikal sondern in einem horizontal verbaufenden Kettenabschnitt. Aufgrund dieser Maßnahme ist es möglich den oberen oder den unteren Bereich des Kettenspeichers wahlweise zur Lagerung der mit Schokolade gefüllten Formen zu nutzen.

Der Erfindung liegt nun die Aufgabe zu Grunde, einen Kettenspeicher vorzuschlagen, mit welchem der vorstehend genannte Nachteil mindestens teilweise vermieden werden kann, so dass insbesondere die Beladefrequenz gegenüber den herkömmlichen Kettenspeicher erhöht werden kann.

Diese Aufgabe wird erfindungsgemäss durch einen Kettenspeicher mit den Merkmalen des Patentanspruchs 1 gelöst.

Vorteilhafte Ausgestaltungen sind Gegenstand der abhängigen Ansprüche.

Nachfolgend wird anhand der einzigen Figur der Zeichnung ein Ausführungsbeispiel der Erfindung beschrieben.

Der in der Figur dargestellte und als ganzes mit 1 bezeichnete Kettenspeicher besitzt fünf obere und fünf untere, in einem Gestell 2 ortsfest gelagerte, Paare von Umlenkräder, über welche ein aus zwei endlosen Ketten 3 gebildetes KettenPaar geführt ist. In der Zeichnung ist vom Kettenpaar und von jedem Radpaar nur eine Kette 3 bzw. nur ein Rad sichtbar, so dass nachfolgend meist nur von einer Kette 3 oder einem Rad die Rede ist. Die oberen Räder sind mit 11 bis 15 und die unteren Räder mit 21 bis 25 bezeichnet. Von diesen Räder werden die beiden Umlenkräder 21 und 25 je durch einen Motor 26 bzw. 27 angetrieben.

Zwischen diesen in festen Lagern frei drehbar gelagerten Radpaaren sind noch weitere Umlenkräder oder Umlenkrollen vorhanden. Von diesen sind jeweils vier in einem vertikal verschiebbaren Schlitten 30 (30.1, 30.2) frei drehbar gelagert, wobei der Schlitten 30 in einer vertikalen Schiene geführt ist und wobei auch hier die nicht sichtbare Gegenseite eines jeden Schlittens 30 identisch ausgebildet ist.

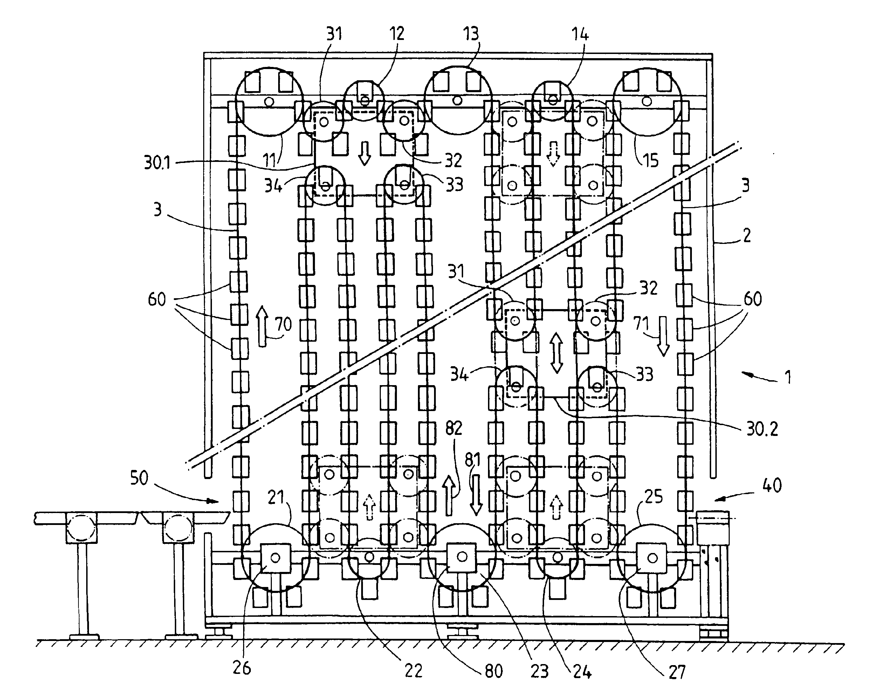

Der Verlauf der Kette 3 ist aus der Figur 1 gut ersichtlich. Vom ersten oberen Umlenkrad 11 führt sie senkrecht nach unten zum oberen Umlenkrad 31 des ersten Schlittens 30.1, von dort senkrecht nach oben zum ortsfesten Umlenkrad 12, von dort wieder senkrecht nach unten zum oberen Umlenkrad 32 des gleichen Schlittens 30.1, von dort wieder nach oben zum ortsfesten Umlenkrad 13 und so weiter bis zum letzten ortsfesten oberen Umlenkrad 15. Von dort führt die Kette 3 dann an der Entladestation 40 vorbei zum unteren Umlenkrad 25 und von dort über die unteren Umlenkräder 33 und 34 der Schlitten 30 sowie über die ortsfesten unteren Umlenkräder 24, 23, 22 und 21 zurück zur Beladestation 50.

Mit 60 sind die einzelnen der Aufnahme der Gegenstände bzw. Produktreihen dienenden Gondeln bezeichnet. Diese in der Figur nur schematisch angedeuteten Gondeln 60 können beispielsweise mehrere Ablage-Etagen aufweisen. Die Gondeln 60 sind darüber hinaus derart mit zwei Enden an den beiden Ketten 3 hängend befestigt, dass die Ablage-Etagen unabhängig von der Stellung der Ketten 3 stets ihre horizontale Lage beibehalten.

Zum Füllen des Speichers 1 wird an der Beladestation 50 eine Ablage-Etage nach der anderen beladen, wozu der durch einen Steuermechanismus gesteuerte Motor 26 das Rad 21 schrittweise in Richtung des Pfeiles 70 dreht, während beispielsweise der Entlademotor 27 das Rad 25 blockiert hält. Beim Entnehmen der Gegenstände aus dem Speicher 1 wird in analoger Weise der Motor 27 des Rades 25 so in Betrieb gesetzt, dass er den an der Entladestation vorbeilaufende Trum der Kette 3 schrittweise in Pfeilrichtung 71 nach unten zieht, bis jeweils eine Gondel 60 an der Entladestation 40 ankommt. Die Gondeln 60 können sodann nacheinander entladen werden, und zwar so, wie das bereits bei den herkömmlichen Kettenspeichern bekannt ist.

Der Kettenspeicher 1 ist nun derart ausgebildet, dass er eine Beladekapazität von über 100, beispielsweise 120 bis 150 Tablaren pro Minute erlaubt, ohne dass durch das taktweise Beladen ein nachteiliges Aufschaukeln der Gondeln verursacht. So besitzt der Kettenspeicher 1 noch zusätzlich eine Kettenantriebsvorrichtung, welche die Vertikalbewegung der Schlitten 30 so steuert, dass sich letztere während des Betriebes des Kettenspeichers 1, wenn immer möglich, in der oberen Hälfte der sie führenden Schienen befinden, vorzugsweise die höchstmögliche Vertikalposition einnehmen. Die zur Vertikalpositionierung der Schlitten 30 dienende Kettenantriebsvorrichtung weist im gezeichneten Ausführungsbeispiel einen Antriebsmotor 80 auf, der das bezüglich der Kettenführung zwischen den beiden Schlitten 30 angeordnete, unteren ortsfeste Umlenkrad 23 wahlweise sowohl in Pfeilrichtung 81 als auch in Pfeilrichtung 82 antreiben kann.

Der Kettenspeicher 1 besitzt ferner nicht gezeichnete Steuermittel, die beispielsweise manuell betätigbare Bedienungselemente, elektronische Elemente, beispielsweise mindestens einen digitalen Prozessor, Anzeige- und Registriergeräte sowie Datenspeicher sowie eventuell pneumatische und/oder hydraulische Steuerelemente, wie Ventile und dergleichen aufweisen. Elektrische Leitungen und eventuell Fluidleitungen verbinden dabei die Steuermittel mit der Beladestation 50, der Entladestation 40, den Motoren 26 und 27 des Be- und Entaldetrums und mit dem Motor 80 des ortsfesten unteren Umlenkrades 23. Die Steuermittel sind im übrigen derart ausgebildet, dass die Beladung, Zwischenspeicherung und Entladung der Produkte wahlweise mit Hilfe der Bedienungselemente durch mindestens eine Person und/oder mindestens zeitweise automatisch gesteuert werden können.

Nun wird der Betrieb eines in einer Produktionsanlage integrierten Kettenspeichers 1 erläutert. Dabei wird zunächst der im Idealfall stattfindende Idealbetrieb beschrieben. Bei diesem produziert eine Produktionsvorrichtung fortlaufend Gegenstände und führt diese beispielsweise reihenweise und in gleichmässigen Zeitabständen der Beladestation 50 des Kettenspeichers 1 zu.

Wenn der Kettenspeicher 1 beim Start eines Produktionsprozesses leer ist, wird beim Eintreffen von Gegenständen bei der Beladestation 50 zuerst der Kettenspeicher 1 höchstens teilweise, nämlich ungefähr höchstens zur Hälfte gefüllt. Beim herkömmlichen Beladevorgang verschiebt sich - bei blockiertem Umlenkrad 25 - zuerst der erste Schlitten 30.1 vertikal nach unten, bis dieser seine tiefste Position erreicht. Erst nach dem der erste Schlitten 30.1. seine tiefste Position erreicht hat, bei welcher der Speicher 1 bereits zur Hälfte gefüllt ist, wird beim weiteren Beladen des Speichers 1 auch der zweite Schlitten 30.2. nach unten verschoben.

Es wurde nun überraschend festgestellt, dass die die Höhe der Taktfrequenz der Beladestation 50 limitierende, nachteilige Aufschaukel- und Pendelbewegung der Gondeln 60 von der vertikalen Schlittenposition abhängig ist. Ferner wurde festgestellt, dass die Aufschaukel- und Pendelbewegung mit dem vertikalen Verschieben der Schlitten 30 nach unten zunimmt, das heisst, dann am kritischsten ist, wenn beide Schlitten 30 nacheinander in ihre Tiefstellung verschoben werden und der Speicher 1 in einem Zuge vollständig beladen wird.

Vorzugsweise treibt nun der Antriebsmotor 80 die Kette 3 beim Beladen des Kettenspeichers 1 so in Pfeilrichtung 82 an, dass jeweils beide Schlitten 30 gemeinsam vertikal nach unten verschoben werden, und zwar Im Idealfall soweit, bis diese höchstens je zur Hälfte der Länge des Trums nach unten verschoben sind.

Nach dem der Speicher 1 höchstens zur Hälfte gefüllt ist, wird auch die Entladestation 40 in Betrieb genommen, das heisst es wird die Blockierung des Entladetrums gelöst, so dass kontinuierlich und unterbruchslos Gegenstände mit einer konstanten Förderrate, die beim Idealbetrieb gleich der Produktionsrate ist, einer Verpackungsvorrichtung zugeführt werden können.

Der vorgängig beschriebene Idealbetrieb kann durch verschiedene Störungen gestört werden. Es kann zum Beispiel ab und zu eine der Beladestation 50 zugeführte Produktereihe fehlen. Es kann auch geschehen, dass die Zufuhrrate der dem Speicher 1 zugeführten Gegenstände und die Verpackungsrate der Verpackungsvorrichtung vorübergehend voneinander abweichen. Die Produktionsrate der Produktionsvorrichtung kann zum Beispiel wegen irgend einer kleinen Störung vorübergehend etwas kleiner sein als beim Idealbetrieb, so dass die Zufuhrrate der geförderten Gegenstände kleiner ist als die Verpackungsrate der Verpackungsvorrichtung. Es ist auch möglich, dass die Verpackungsvorrichtung vorübergehend langsamer arbeitet als vorgesehen. Dies kann zum Beispiel geschehen, wenn die zur Verpackungsvorrichtung geförderten Gegenstände ein wenig schief zur Förderrichtung auf der den Speicher 1 verlassenden Abtransportierbahn liegen und dann vor dem Verpacken noch ausgerichtet werden müssen.

In all diesen Fällen können die Steuermittel den Kettenspeicher 1 derart steuern, dass die Gegenstände auf der Abtransportierbahn die für den Idealbetrieb vorgesehenen Abstände haben und in den beim Idealbetrieb vorgesehenen Zeitabständen zur Verpackungsvorrichtung gelangen. Beim automatischen Betrieb bewirken die Steuermittel dabei eine wahlweise unabhängige Verlangsamung, Beschleunigung oder Blockierung des Belade- bzw. Entladevorganges. Ferner steuern die Steuermittel die Antriebsvorrichtung des Umlenkrades 23 derart, dass sich die beiden Schlitten 30, wenn immer möglich, in der oberen Hälfte der sie führenden Schienen befinden, vorzugsweise ihre höchstmögliche Vertikalposition einnehmen, so dass dadurch ein nachteiliges Aufschaukeln der Gondeln vermieden wird.

Es versteht sich von selbst, dass die Ansteuerungen der Antriebsmotoren 26, 27 und 80 zu jedem Zeitpunkt des Betriebes des Kettenspeichers 1 auf einander abgestimmt sind und dass vorallem die Steuermittel so ausgebildet sind, dass bei blockierter Entladevorrichtung 40 und vollständig hinunter gefahrenem Schlitten 30.2 der Antriebsmotor 80 von der Kette 3 entkoppelt oder im Leerlauf ist oder das Umlenkrad 23 höchstens in Pfeilrichtung 81 antreibt.

Der erfindungsgemässe Kettenspeicher 1 kann auf verschiedene Arten geändert werden. So kann der zur Steuerung der vertikalen Schlittenposition bestimmte Antriebsmotor 80 anstelle mit dem unteren ortsfesten Umlenkrades 23 wahlweise auch mit einem anderen Umlenkrad, beispielsweise mit dem oberen ortsfesten Umlenkrad 13 gekoppelt sein. Ferner kann der Speicher 1 mehr als nur zwei Schlitten und entsprechenderweise mehrere Antriebsvorrichtungen zur Vertikalpositionierung der Schlitten besitzen.

## Patentansprüche

1. Kettenspeicher mit zwei endlosen Ketten (3), die gemeinsam zur Güteraufnahme dienende Gondeln (60) tragen und durch starr miteinander verbundene Zahn- oder Kettenräder gemeinsam angetrieben werden, wobei jede Kette (3) über mindestens drei obere (11, 12, 13, 14, 15) und drei untere (21, 22, 23, 24, 25) ortsfeste Umlenkräder sowie über Umlenkräder geführt ist, von denen je zwei (31, 34; 32, 33) übereinander in einem vertikal verschiebbaren Schlitten (30) frei drehbar gelagert sind, und zwar derart,
- dass die Kette (3) jeweilen von einem oberen ortsfesten Umlenkrad (11, 13) senkrecht nach unten zu einem oberen Umlenkrad (31,32) eines Schlittens (30) und von dort senkrecht nach oben zum nächsten ortsfesten oberen Umlenkrad (12, 13, 14, 15) gelangt,
- dass sie jeweilen von einem unteren ortsfesten Umlenkrad 22, 23, 24, 25) senkrecht nach oben zum unteren Umlenkrad (33, 34) eines Schlittens (30) und von dort senkrecht nach unten zum nächsten ortsfesten unteren Umlenkrad (21, 22, 23, 24) gelangt,
- dass sie vom, letzten oberen ortsfesten Umlenkrad (15) zum letzten unteren ortsfesten Umlenkrad (25) und vom ersten unteren ortsfesten Umlenkrad (21) zum ersten oberen ortsfesten Umlenkrad (11) gelangt,
wobei an den beiden äussersten Trums der Kette (3) einerseits eine Beladestation (50) und andererseits eine Entladestation (40) vorgesehen sind und wobei dem Be- und Entladetrum je eine Antriebsvorrichtung zugeordnet ist, die jeweils das obere oder untere dem Be- bzw. Entladetrum zugeordnete ortsfeste äusserste Umlenkrad (21, 25) antreibt, **gekennzeichnet durch** zusätzliche Antriebsmittel (80) um die Schlitten (30) unabhängig von den Antrieben (26, 27) der Be- und Entladungstrume wahlweise vertikal zu verschieben, und **durch** Steuermittel zur Steuerung der Antriebsmittel.

2. Kettenspeicher nach Anspruch 1, **dadurch gekennzeichnet, dass** die zusätzlichen Antriebsmittel einen Antriebsmotor (80) zum Antreiben eines oberen oder unteren ortsfesten Umlenkrades (23) besitzen, der in Bezug auf die Kettenführung zwischen jeweils zwei Schlitten (30) angeordnet ist.

3. Kettenspeicher nach Anspruch 2, **dadurch gekennzeichnet, dass** die Steuermittel so ausgebildet sind, dass sie auch dem Antriebsmotor an das von Ihnen anzutreibende ortsfeste Umlenkrad ankoppeln und von ihm entkoppeln können.

## Claims

1. Chain-type storage system having two endless chains (3) which together bear gondolas (60), serving for accommodating goods, and are commonly driven by gearwheels or chain wheels which are connected rigidly to one another, each chain (3) being guided over at least three upper (11, 12, 13, 14, 15) and three lower (21, 22, 23, 24, 25) stationary deflecting wheels and over deflecting wheels of which in each case two (31, 34; 32, 33) are mounted in a freely rotatable manner one above the other in a vertically displaceable carriage (30), to be precise such
- that the chain (3) passes in each case vertically downwards from an upper stationary deflecting wheel (11, 13) to an upper deflecting wheel (31, 32) of a carriage (30) and, from there, passes vertically upwards to the next upper stationary deflecting wheel (12, 13, 14, 15),
- that the chain passes in each case vertically upwards from a lower stationary deflecting wheel (22, 23, 24, 25) to the lower deflecting wheel (33, 34) of a carriage (30) and, from there, passes vertically downwards to the next lower stationary deflecting wheel (21, 22, 23, 24),
- that the chain passes from the final upper stationary deflecting wheel (15) to the final lower stationary deflecting wheel (25) and from the first lower stationary deflecting wheel (21) to the first upper stationary deflecting wheel (11), a loading station (50), on the one hand, and an unloading station (40), on the other hand, being provided on the two outermost strands of the chain (3), and the loading and unloading strands each being assigned a drive arrangement which drives in each case the upper or lower outermost stationary deflecting wheel (21, 25) assigned to the loading or unloading strand,
**characterized by** additional drive means (80) in order to displace the carriages (30) optionally vertically independently of the drives (26, 27) of the loading and unloading strands, and by control means for controlling the drive means.

2. Chain-type storage system according to Claim 1, **characterized in that** the additional drive means have a drive motor (80) for driving an upper or lower stationary deflecting wheel (23), the drive motor being arranged, in respect of the chain guidance, between in each case two carriages (30).

3. Chain-type storage system according to Claim 2, **characterized in that** the control means are designed such that they can also be used for coupling the drive motor to the stationary deflecting wheel which can be driven thereby and for uncoupling it therefrom.

## Revendications

1. Un magasin tampon à chaîne avec deux chaînes en boucle (3), qui portent ensemble des nacelles (60), servant au chargement des marchandises, et qui sont entraînées ensemble par des roues dentées ou à chaîne reliées ensemble de façon rigide, où chaque chaîne (3) est guidée par-dessus au moins trois roues de renvoi supérieures (11, 12, 13, 14, 15) et trois inférieures (21, 22, 23, 24, 25) stationnaires, ainsi que par-dessus des roues de renvoi dont à chaque fois deux (31, 34 ; 32, 33) sont montées l'une au-dessus de l'autre dans un chariot (30) coulissant verticalement et tournant librement, d'une manière telle,
- que la chaîne (3) parvient chaque fois d'une roue de renvoi supérieure stationnaire (11, 13) verticalement vers le bas jusqu'à une roue de renvoi supérieure (31, 32) d'un chariot (30) et de là continue verticalement vers le haut jusqu'à la prochaine roue de renvoi supérieure stationnaire (12, 13, 14, 15),
- qu'elle parvient chaque fois d'une roue de renvoi inférieure stationnaire (22, 23, 24, 25) verticalement vers le haut jusqu'à la roue de renvoi inférieure (33, 34) d'un chariot (30) et de là continue verticalement vers le bas jusqu'à la prochaine roue de renvoi inférieure stationnaire (21, 22, 23, 24),
- qu'elle parvient de la dernière roue de renvoi stationnaire supérieure (15) jusqu'à la dernière roue de renvoi stationnaire inférieure (25) et de la première roue de renvoi stationnaire inférieure (21) jusqu'à la première roue de renvoi stationnaire supérieure (11),
où aux deux brins extérieurs de la chaîne (3) sont prévues d'un côté une station de chargement (50) et de l'autre côté une station de déchargement (40) et où un dispositif d'entraînement est affecté et au brin de chargement et au brin de déchargement, qui entraîne à chaque fois la roue de renvoi stationnaire la plus extérieure (21, 25) supérieure
ou inférieure qui est affectée au brin de chargement resp. de déchargement,
**caractérisé en** des moyens d'entraînement (80) supplémentaires afin de déplacer les chariots (30) verticalement au choix, indépendamment des entraînements (26, 27) des brins de chargement et de déchargement, et en des moyens de commande pour commander les moyens d'entraînement.

2. Un magasin tampon à chaîne selon la revendication 1, **caractérisé en ce que** les moyens d'entraînement supplémentaires comprennent un moteur d'entraînement (80) pour l'entraînement d'une roue de renvoi supérieure ou inférieure (23) stationnaire qui est disposé chaque fois entre deux chariots (30) par rapport à la direction de la chaîne.

3. Un magasin tampon à chaîne selon la revendication 2, **caractérisé en ce que** les moyens de commande sont formés de telle façon à pouvoir également coupler la roue de renvoi stationnaire qu'ils doivent entraîner au moteur d'entraînement et à pouvoir la découpler de celui-ci.
